(19) Europäisches Patentamt
European Patent Office
Office européen des brevets

(11) **EP 3 288 178 B1**

(12) **EUROPEAN PATENT SPECIFICATION**

(45) Date of publication and mention
of the grant of the patent:
**31.03.2021 Bulletin 2021/13**

(21) Application number: **17183888.1**

(22) Date of filing: **28.07.2017**

(51) Int Cl.:
*H02P 21/18* $^{(2016.01)}$    *H02P 21/00* $^{(2016.01)}$
*H02P 21/04* $^{(2006.01)}$    *H02P 21/24* $^{(2016.01)}$

(54) **"SENSORLESS" VECTOR CONTROL SYSTEM FOR AN INDUCTION MOTOR**

SENSORLOSES VEKTORSTEUERUNGSSYSTEM FÜR INDUKTIONSMOTOR

SYSTÈME DE COMMANDE VECTORIELLE « SANS CAPTEUR » POUR MOTEUR À INDUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2016 IT 201600080214**

(43) Date of publication of application:
**28.02.2018 Bulletin 2018/09**

(73) Proprietor: **HITACHI RAIL S.p.A.
80147 Napoli (IT)**

(72) Inventors:
• **SCHIAVO, Roberta
80147 Napoli (IT)**
• **FRATELLI, Luigi
80147 Napoli (IT)**

(74) Representative: **Bongiovanni, Simone et al
Studio Torta S.p.A.
Via Viotti, 9
10121 Torino (IT)**

(56) References cited:
**EP-A1- 2 093 878        EP-A1- 2 728 736
JP-A- 2003 324 998    US-B1- 6 532 405**

• **BONDARKO V A ET AL: "Speed and flux
estimation for an induction motor without
position sensor", PROCEEDINGS OF THE 1999
AMERICAN CONTROL CONFERENCE : JUNE 2 -
4, 1999, HYATT REGENCY SAN DIEGO, SAN
DIEGO, CALIFORNIA, USA, IEEE SERVICE
CENTER, PISCATAWAY, NJ, vol. 6, 2 June 1999
(1999-06-02), pages 3890-3894, XP010345299,
DOI: 10.1109/ACC.1999.786245 ISBN:
978-0-7803-4990-2**

**Description**

The present invention relates to a "sensorless" vector control system for an induction motor.

As already known, induction motors are widely used in electric traction applications, particularly in railways and tramways, due to the undisputed advantages of the motor, such as constructive simplicity, reliability, intrinsic robustness and reduced costs.

In recent decades, permanent magnet brushless drives have also been used in railway traction, since they are associated with smaller dimensions if compared to induction motors, and with a higher efficiency; however, some intrinsic problems of the brushless motors have not yet been solved, thus limiting their diffusion, at least in the railway field.

With regard to the control of induction motors, most rail traction unit manufacturers offer a FOC (Field Oriented Control) or IFOC (Indirect Field Oriented Control) motor vector control. Other manufacturers propose different controls, e.g. based on SVV-DTC (SpaceVector modulated Direct Torque Control) technologies.

Vector control ensures good dynamic and energetic performance, satisfactory stability, and high quality traction index values, as required by modern systems.

All controls, and therefore also vector controls, need to know with great accuracy the rotation speed of the motor that is determined in a closed loop by a plurality of speed sensors; the presence of a large number of speed sensors is considered undesirable by many manufacturers, because of their cost and mainly because the use of such components can cause reliability problems.

In fact, speed sensors are normally arranged on the motor axis in a very critical position due to external agents (vibrations, high temperatures, external agents, etc.) that affect the operation of the sensors, thus dramatically reducing their reliability and lifetime.

In order to overcome this disadvantage, asynchronous motor controls have been proposed that do not use speed sensors i.e. that are "sensorless".

In this regard, the following publications illustrate "sensorless" vector controls:

- Vas P., "Sensorless vector and direct torque control", Vol. 729. Oxford University Press, Oxford, UK, 1998;
- Bocker, J.; Mathapati, S., "State of the art of induction motor control", IEEE International Electric Machines & Drives Conference, 2007. IEMDC '07, vol. 2, pp.1459÷1464, 3÷5 May 2007;
- Schauder, C., "Adaptive speed identification for vector control of induction motors without rotational transducers", IEEE Trans. IA 28-5, Sept/Oct, 1992, pp. 1054÷1061; e
- Holtz, J., "Sensorless control of induction machines - with or without signal injection?", IEEE Trans. on IE, 53-1, pp. 7÷30, Feb 2006.
- JP 2003 324998A discloses the features of the preamble of claim 1.

- EP 2.093.878

However, even such sensorless controls are not problem-free, because they are subject to variations in machine parameters, thus being inherently "fragile" and losing their effectiveness under some of the typical railway operating conditions.

Therefore, there is the need for a sensorless vector control that solves the drawbacks of known controls and therefore works under all operating conditions.

Other prior art documents are: EP 2.728.736 and US 6.532.405.

The object of the present invention is defined by the subject matter of independent claim 1. Preferred embodiments are defined by the dependent claims.

The invention will now be illustrated with reference to the accompanying drawings, which represent a preferred nonlimiting embodiment, wherein:

- Figure 1 schematically shows a locomotive having a sensorless vector control system.
- Figure 2 is a block diagram showing the structure and operation of the control system of Figure 1;
- Figure 3 shows a detail of Figure 1.

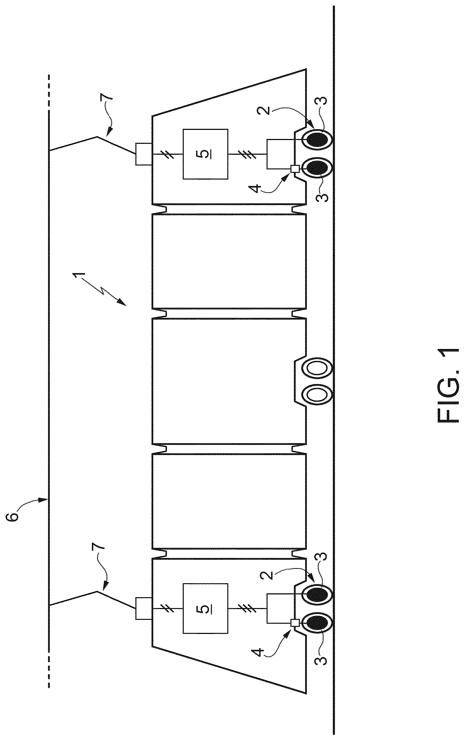

Figure 1 indicates with the reference number 1, as a whole, a locomotive or even a railcar driven by a plurality of induction motors 2 (in the example they are four, but the number may be different) generally carried in pairs by a railway trolley, wherein each motor is coupled with a pair of drive wheels 3 through a transmission 4 (schematically shown), also carried by the railway trolley.

Each induction motor (or more motors) is powered by an inverter 5, taking the power for its operation from an air supply line 6 (catenary) through a pantograph 7 (schematically shown).

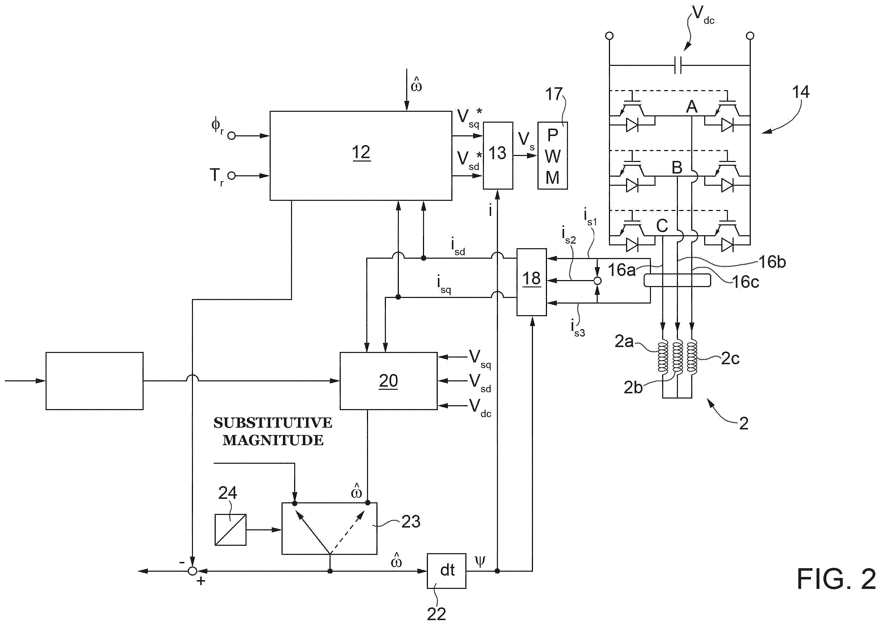

According to the present invention, the inverter 5 is provided with a sensorless vector control system, detailed in Figure 2.

The sensorless control system includes:

- a calculation block (12) that receives, as input, a reference flux Φr and a reference torque Γr, the measured currents $i_{sd}$ and $i_{sq}$ on which a feedback is carried out and generates, as output, the objective components of the stator voltage **Vsd\*, Vsq\*** along the axes d and q of a reference system rotating at the synchronous speed with which the rotor flux rotates and with an axis d aligned with the rotor flux;
- a first conversion block 13 that receives, as input, the objective components of the stator voltage **Vsd\*, Vsq\*** and generates, as output, a vector **Vs** expressing the module and the phase of the stator voltage expressed in a fixed reference system;
- a PWM control 17 that receives, as input, the vector **Vs** and controls the switches of a three-phase bridge 14 (VSI Voltage, Source, Inverter) that chops a DC voltage Vdc which powers three windings 2a, 2b, 2c (schematically shown) of the stator of the induction motor 2 by means of electric lines 16a, 16b and 16c;

- a second conversion block 18 that receives, as input, the measurement of the power supplying currents $i_{s1}$, $i_{s2}$, $i_{s3}$ of the motor 2, which flow along the electric lines 16a, 16b and 16c and generates, as output, currents $i_{sd}$ and $i_{sq}$ measured along the axes d and q of the rotating reference system by using the estimate of the phase $\psi^\wedge$ of the rotor flux;

- an estimator 20 that receives, as input, the currents $i_{sd}$ and $i_{sq}$ and the reference stator voltage **Vsd\***, **Vsq\*** and generates, as output, an estimate of the synchronous speed $\omega^\wedge$;

- an integrator block 22 that receives, as input, the estimated synchronous speed $\omega^\wedge$ and generates, as output, an estimate of the phase $\psi^\wedge$ of the rotor flux which feeds the second conversion block 18.

According to the present invention, in certain operating situations illustrated below, the estimate of the synchronous speed $\omega^\wedge$ of the motor power supply voltage is not used and, instead of such magnitude, a replacement magnitude is used which comprises the rotation speed of the motor $\omega_r$ which, in turn, is obtained based on the movement speed $S_T$ of the locomotive 1 along the railway line. This selection is shown by a switch 23 that replaces the estimate of the synchronous speed $\omega^\wedge$ with the replacement magnitude. The control circuit 24 operates the switching of the switch 23 by detecting the operating situations that control the switching of the switch 23.

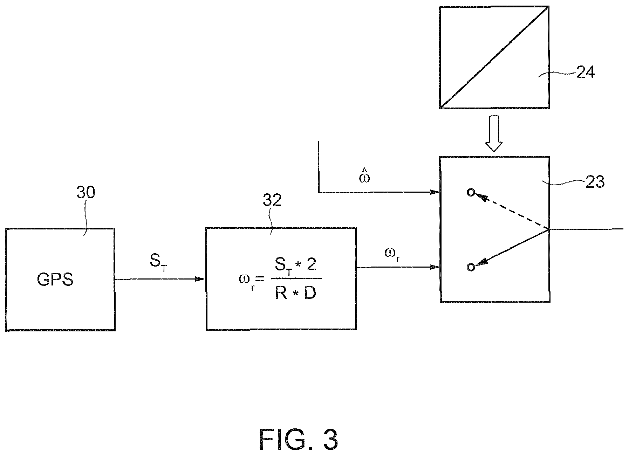

In order to find the replacement magnitude, the system 1 comprises (Figure 3) :

- a detector 30 of the movement speed $S_T$ of the locomotive 1 obtained by means of one or more of the following navigation systems:

  o an odometer system that detects the speed of the locomotive by means of the rotation speed of the wheels, which can be in particular related to the non-motorized axes; or
  o an inertial navigation system that measures the linear and angular instantaneous accelerations on one or more axes, and that, by integrating said accelerations, reconstructs the speed of the locomotive, possibly also with the aid of the terrestrial magnetic field measurement, to reconstruct the instantaneous geographic orientation of the locomotive; or
  o a detector associated with a satellite navigation system, "SATNAV", of the global type (GNSS) or even of the regional type, which can also be of a multi-constellation type and or also of the global and regional improved type, with auxiliary stations based on satellites or on the ground, such as NAVSTAR GPS, GLONASS, BeiDou, COMPASS, GALILEO, NAVIC, IRNSS, QZSS, WAAS, EGNOS and others, adapted for providing the $S_T$ instantaneous value directly or by deriving it from the movement.

- a third conversion block 32 that receives, as input, the movement speed $S_T$ and generates, as output, a calculated value of the rotation speed of the motor $\omega_r$ according to the following expression:

$$\omega_r = \frac{S_T * 2}{R * D} \qquad (1)$$

wherein:

$S_T$ is the movement speed of the locomotive 1;
R is the transmission ratio of the transmission 4;
D is the diameter of the wheels 3.

In this regard, please note that the rotation speed of the motor $\omega_r$ is related to the synchronous speed $\omega$ through the slip $\omega_\sigma$ so that:

$$p * \omega_r = \omega - \omega_\sigma \qquad (2)$$

wherein:

- p is the number of pole pairs of the induction motor;
- $\omega_\sigma$ is the slip.

Since the slip $\omega\sigma$ is zero at the powering of the inverter 5, because the torque generated by the motor is still zero (when the flux is below a threshold value), it follows that

$$\omega = \frac{p * S_T * 2}{R * D} \qquad (3)$$

At the powering of the inverter the switch 23 replaces the estimate of the synchronous speed $\omega^\wedge$ with (3), that is:

$$\omega_\wedge = \frac{p * S_T * 2}{R * D}$$

This occurs in order to provide a better estimate of the synchronous speed $\omega^\wedge$ since, under certain operating conditions, the estimate provided by the block 20 would provide a value far from reality by subjecting the traction system to non-sustainable transient phenomena. In this way, the replacement magnitude is used as RESET value of the estimation algorithm used by the control system by reducing the convergence times of the estimation algorithm and making the extent of transient phenomena sustainable.

This condition is present in a plurality of situations detected by the control circuit 24:

> i) sudden loss of power to the inverter due to the decoupling of the pantograph from the power line or due to the intervention of the protection electronic circuits of the inverter;
>
> ii) an uphill restart, wherein the initial speed of the locomotive is negative at the activation of the inverter (5) and the speed of the electric vehicle is lower than a threshold value for a given period of time as a result of the activation of the inverter (6).

## Claims

1. A sensorless vector control system for an inverter (5) which feeds an induction motor (2) mounted on an electric vehicle, for example a locomotive, a railcar or a tram (1), said control system (10) comprising an estimator (20) configured to receive, as input, values of currents measured at the motor ($i_{sd}$, $i_{sq}$), reference values of the stator voltages (**Vsd\*, Vsq\***) and to generate, as output, the estimate of the synchronous speed $\omega^\wedge$ of the motor, the control system **comprising** control means (24) and a device for determining a substitutive magnitude that substitutes, in certain operating situations and following a command coming from the control means (24), the estimate of the synchronous speed $\omega^\wedge$ determined by the estimator (20);
said substitutive magnitude comprising the motor rotation speed $\omega_r$, which in turn is obtained according to the movement speed $S_T$ of the electric vehicle (1) determined by direct detection means of the instantaneous speed $S_T$ of the electric vehicle (1), **characterized in that** said control means (24) are configured to send said command when detecting at least one of the following operating situations:

    > i) sudden loss of power to the inverter (5) due to the decoupling of the pantograph from the power line or due to the intervention of the protection electronic circuits of the inverter (5);
    > ii) a critical situation of uphill restart, wherein the speed of the electric vehicle is negative at the activation of the inverter (5) and the speed of the electric vehicle is lower than a threshold value for a given period of time as a result of the activation of the inverter (6).

2. The system according to claim 1, wherein said device is configured to determine said substitutive magnitude at the powering of the inverter (5) when the slip $\omega_\sigma$ is zero according to the following expression:

$$\omega = \frac{p * s_T * 2}{R * D}$$

wherein:

> $S_T$ is the speed of the electric vehicle (1);
> p is the number of pole pairs of the induction motor (2);
> R is the transmission ratio of the transmission (4) interposed between the output of the induction motor and the wheels (3) of the electric vehicle (1); and
> D is the diameter of the wheels (3) of the electric vehicle.

3. The system according to any one of the preceding claims, wherein means for direct detection of the instantaneous vehicle speed $S_T$ comprise a detector (30) of the movement speed $S_T$ of the electric vehicle (1) obtained by means of one or more of the following navigation systems:

    > ○ an odometer system, which detects the speed of the electric vehicle by means of the rotation speed of the wheels, which can be in particular related to the non-motorized axes; or
    > ○ an inertial navigation system that measures the linear and angular instantaneous accelerations on one or more axes, and that, by integrating said accelerations, reconstructs the speed of the electric vehicle, possibly also with the aid of the terrestrial magnetic field measurement, to reconstruct the instantaneous geographic orientation of the electric vehicle; or
    > ○ a detector associated with a satellite navigation system, "SATNAV", of the global type (GNSS) or even of the regional type, which can also be of a multi-constellation type and or also of the global and regional improved type, with auxiliary stations based on satellites or on the ground, such as NAVSTAR GPS, GLONASS, BeiDou, COMPASS, GALILEO, NAVIC, IRNSS, QZSS, WAAS, EGNOS, adapted for providing the $S_T$ instantaneous value directly or by deriving it from the movement.

4. The system according to any one of the preceding claims, wherein said control system comprises:

    > - a calculation block (12) that receives, as input, a reference flux $\Phi r$ and a reference torque $\Gamma r$, the measured currents $i_{sd}$ and $i_{sq}$ on which a feedback is carried out and produces, as output, the objective components of the stator voltage **Vsd\*, Vsq\*** along the axes d and q of a reference system rotating at the synchronous speed with which the rotor flux rotates and with an axis d aligned with the rotor flux;

- a first conversion block (13) that receives, as input, the objective components of the stator voltage **Vsd\*, Vsq\*** and generates, as output, a vector **Vs** expressing the module and the phase of the stator voltage expressed in a fixed reference system;

- a PWM control (17) that receives, as input, the vector **Vs** and controls the switches of a three-phase bridge (14) that chops a DC voltage Vdc which powers three windings (2a, 2b, 2c) of the stator of the induction motor (2) by means of electric lines (16a, 16b and 16c);

- a second conversion block (18) that receives, as input, the measurement of the power supplying currents $i_{s1}$, $i_{s2}$, $i_{s3}$ of the motor (2), which flow along the electric lines (16a, 16b and 16c) and generates, as output, currents $i_{sd}$ and $i_{sq}$ measured along the axes d and q of the rotating reference system;

- said estimator (20) that receives, as input, the currents $i_{sd}$ and $i_{sq}$ and the objective components of the stator voltage **Vsd\*, Vsq\*** to generate, as output, said estimated motor synchronous speed $\omega^\wedge$;

- an integrator block (22) that receives, as input, the estimated synchronous speed $\omega^\wedge$ and generates, as output, an estimate of the phase $\psi^\wedge$ of the rotor flux which feeds the second conversion block (18) .

**Patentansprüche**

1. Sensorloses Vektorsteuerungssystem für einen Inverter (5), welcher einen Induktionsmotor (2) speist, der an einem elektrischen Fahrzeug, beispielsweise einer Lokomotive, einem Triebwagen oder einer Straßenbahn (1) angebracht ist, wobei das besagte Steuerungssystem (10) einen Schätzer (20) umfasst, der ausgebildet ist, als Eingang Werte von an dem Motor gemessenen Strömen ($i_{sd}$, $i_{sq}$), Referenzwerte der Statorspannungen Vsq\*) zu empfangen und als Ausgang die Schätzung der Synchrondrehzahl $\omega^\wedge$ des Motors zu erzeugen, wobei das Steuerungssystem Steuermittel (24) und eine Vorrichtung zum Bestimmen einer Ersatzgröße umfasst, die in bestimmten Betriebssituationen und im Anschluss an einen von den Steuermitteln (24) kommenden Befehl die durch den Schätzer (20) bestimmte Schätzung der Synchrondrehzahl $\omega^\wedge$ ersetzt;

wobei die Ersatzgröße die Motordrehzahl $\omega_r$ umfasst, welche ihrerseits gemäß der Bewegungsgeschwindigkeit $S_T$ des Elektrofahrzeugs (1) erhalten wird, die durch direkte Erfassungsmittel der momentanen Geschwindigkeit $S_T$ des Elektrofahrzeugs (1) bestimmt wird,

**dadurch gekennzeichnet, dass** die Steuermittel (24) ausgebildet sind, den Befehl zu senden, wenn mindestens eine der folgenden Betriebssituationen erfasst wird:

i) plötzlicher Leistungsverlust des Inverters (5) aufgrund der Entkopplung des Stromabnehmers von der Stromleitung oder aufgrund des Eingriffs der elektronischen Schutzschaltungen des Inverters (5);

ii) eine kritische Situation des Wiederanfahrens bergauf, wobei die Geschwindigkeit des Elektrofahrzeugs bei der Aktivierung des Inverters (5) negativ ist und die Geschwindigkeit des Elektrofahrzeugs infolge der Aktivierung des Inverters (6) für eine bestimmte Zeitspanne unter einem Schwellenwert liegt.

2. System nach Anspruch 1, wobei die Vorrichtung ausgebildet ist, die Ersatzgröße beim Einschalten des Inverters (5) zu bestimmen, wenn der Schlupf $\omega_\sigma$ Null ist gemäß dem folgenden Ausdruck:

$$\omega = \frac{p * s_T * 2}{R * D}$$

wobei:

$S_T$ die Geschwindigkeit des Elektrofahrzeugs (1) ist;
p die Anzahl der Polpaare des Induktionsmotors (2) ist;
R das Übersetzungsverhältnis des Getriebes (4) ist, das zwischen dem Ausgang des Induktionsmotors und den Rädern (3) des Elektrofahrzeugs (1) angeordnet ist; und
D der Durchmesser der Räder (3) des Elektrofahrzeugs ist.

3. System nach einem der vorhergehenden Ansprüche, wobei Mittel zur direkten Erfassung der momentanen Fahrzeuggeschwindigkeit $S_T$ einen Detektor (30) für die Bewegungsgeschwindigkeit $S_T$ des Elektrofahrzeugs (1) umfassen, der mittels eines oder mehrerer der folgenden Navigationssysteme erhalten wird:

◦ ein Wegstreckennavigationssystem, welches die Geschwindigkeit des Elektrofahrzeugs anhand der Drehgeschwindigkeit der Räder erfasst, welche insbesondere auf die nicht motorisierten Achsen bezogen sein kann; oder
◦ ein Trägheitsnavigationssystem, das die linearen und winkligen momentanen Beschleunigungen an einer oder mehreren Achsen misst und durch Integration dieser Beschleunigungen die Geschwindigkeit des Elektrofahrzeugs rekonstruiert, eventuell auch mit Hilfe der terrestrischen Magnetfeldmessung, um die momentane geografische Ausrichtung des Elektrofahrzeugs zu rekonstruieren; oder

∘ einen Detektor, der mit einem Satellitennavigationssystem "SATNAV" des globalen Typs (GNSS) oder auch des regionalen Typs verbunden ist, welcher auch von einem Multikonstellationstyp und oder auch von dem globalen und regionalen verbesserten Typ sein kann, mit Hilfsstationen,

die auf Satelliten oder auf dem Boden basieren, wie NAVSTAR GPS, GLONASS, BeiDou, COMPASS, GALILEO, NAVIC, IRNSS, QZSS, WAAS, EGNOS, die angepasst sind, um den $S_T$-Momentanwert direkt oder durch Ableitung von der Bewegung zu liefern.

4. System nach einem der vorhergehenden Ansprüche, wobei das Steuerungssystem umfasst:

- einen Berechnungsblock (12), der als Eingang einen Referenzfluss Φr und ein Referenzdrehmoment Γr, die gemessenen Ströme $i_{sd}$ und $i_{sq}$, an denen eine Rückführung durchgeführt wird, empfängt und als Ausgang die objektiven Komponenten der Statorspannung Vsd*, Vsq* entlang der Achsen d und q eines Referenzsystems erzeugt, das sich mit der Synchrondrehzahl dreht, mit welcher sich der Rotorfluss dreht, und mit einer Achse d, die mit dem Rotorfluss ausgerichtet ist;

- einen ersten Umwandlungsblock (13), der als Eingang die objektiven Komponenten der Statorspannung Vsd*, Vsq* empfängt und als Ausgang einen Vektor Vs erzeugt, der das Modul und die Phase der Statorspannung, ausgedrückt in einem festen Bezugssystem, ausdrückt;

- eine PWM-Steuerung (17), die als Eingang den Vektor Vs empfängt und die Schalter einer dreiphasigen Brücke (14) steuert, die eine Gleichspannung Vdc zerkleinert, welche drei Wicklungen (2a, 2b, 2c) des Stators des Induktionsmotors (2) über elektrische Leitungen (16a, 16b und 16c) versorgt;

- einen zweiten Umwandlungsblock (18), der als Eingang die Messung der Leistungsversorgungsströme $i_{s1}$, $i_{s2}$, $i_{s3}$ des Motors (2) empfängt, welche entlang der elektrischen Leitungen (16a, 16b und 16c) fließen, und als Ausgang Ströme $i_{sd}$ und $i_{sq}$ erzeugt, die entlang der Achsen d und q des rotierenden Referenzsystems gemessen werden;

- den Schätzer (20), der als Eingang die Ströme $i_{sd}$ und $i_{sq}$ und die objektiven Komponenten der Statorspannung Vsd*, Vsq* empfängt, um als Ausgang die geschätzte Motor-Synchrondrehzahl ω^ zu erzeugen;

- einen Integratorblock (22), der als Eingang die geschätzte Synchrondrehzahl ω^ empfängt und als Ausgang eine Schätzung der Phase ψ^ des Rotorflusses erzeugt, welche den zweiten Umwandlungsblock (18) speist.

**Revendications**

1. Système de commande vectorielle sans capteur pour un onduleur (5) qui alimente un moteur à induction (2) monté sur un véhicule électrique, par exemple une locomotive, un wagon ou un tramway (1), ledit système de commande (10) comprenant un estimateur (20) configuré pour recevoir, en entrée, des valeurs de courants mesurés au moteur ($i_{sd}$, $i_{sq}$), des valeurs de référence des tensions statoriques Vsq*) et pour générer, en sortie, l'estimation de la vitesse synchrone ω^ du moteur,

le système de commande comprenant des moyens de commande (24) et un dispositif pour déterminer une grandeur de substitution qui se substitue, dans certaines situations de fonctionnement et à la suite d'une commande provenant des moyens de commande (24), l'estimation de la vitesse synchrone ω^ déterminée par l'estimateur (20) ;

ladite grandeur de substitution comprenant la vitesse de rotation du moteur wr, qui à son tour est obtenue en fonction de la vitesse de déplacement $S_T$ du véhicule électrique (1) déterminée par des moyens de détection directe de la vitesse instantanée $S_T$ du véhicule électrique (1),

**caractérisé en ce que** lesdits moyens de contrôle (24) sont configurés pour envoyer ladite commande lors de la détection d'au moins une des situations de fonctionnement suivantes :

i) perte soudaine de puissance de l'onduleur (5) due au découplage du pantographe de la ligne électrique ou à l'intervention des circuits électroniques de protection de l'onduleur (5) ;
ii) une situation critique de redémarrage en côte, dans laquelle la vitesse du véhicule électrique est négative à l'activation de l'onduleur (5) et la vitesse du véhicule électrique est inférieure à une valeur seuil de l'onduleur pendant une période de temps donnée à la suite de l'activation de l'onduleur (6).

2. Système selon la revendication 1, dans lequel ledit dispositif est configuré pour déterminer ladite grandeur de substitution à l'activation de l'onduleur (5) lorsque le glissement ω^ est égal à zéro selon l'expression suivante :

$$\omega = \frac{p * s_T * 2}{R * D}$$

$S_T$ est la vitesse du véhicule électrique (1) ;
p est le nombre de paires de pôles du moteur à induction (2) ;
R est le rapport de transmission de la transmission (4) interposée entre la sortie du moteur à induction et les roues (3) du véhicule électrique (1) ; et
D est le diamètre des roues (3) du véhicule électrique.

3. Système selon l'une des revendications précédentes, dans lequel les moyens de détection directe de la vitesse instantanée du véhicule $S_T$ comprennent un détecteur (30) de la vitesse de déplacement $S_T$ du véhicule électrique (1) obtenue au moyen d'un ou de plusieurs des systèmes de navigation suivants :

   ◦ un système d'odomètre, qui détecte la vitesse du véhicule électrique au moyen de la vitesse de rotation des roues, qui peut être notamment liée aux axes non motorisés ; ou
   ◦ un système de navigation inertielle qui mesure les accélérations linéaires et angulaires instantanées sur un ou plusieurs axes, et qui, en intégrant lesdites accélérations, reconstruit la vitesse du véhicule électrique, éventuellement aussi à l'aide de la mesure du champ magnétique terrestre, pour reconstruire l'orientation géographique instantanée du véhicule électrique ; ou
   ◦ un détecteur associé à un système de navigation par satellite, "SATNAV", de type global (GNSS) ou même de type régional, qui peut également être de type multi-constellation et ou encore de type global et régional amélioré, avec des stations auxiliaires basées sur des satellites ou au sol, telles que NAVSTAR GPS, GLONASS, BeiDou, COMPASS, GALILEO, NAVIC, IRNSS, QZSS, WAAS, EGNOS, adapté pour fournir la valeur instantanée $S_T$ directement ou en la dérivant du mouvement.

4. Système selon l'une des revendications précédentes, dans lequel ledit système de commande comprend :

   - un bloc de calcul (12) qui reçoit, en entrée, un flux de référence $\phi r$ et un couple de référence $\Gamma r$, les courants mesurés $i_{sd}$ et $i_{sq}$ sur lesquels une rétroaction est effectuée et produit, en sortie, les composantes objectives de la tension statorique Vsd*, Vsq* selon les axes d et q d'un système de référence tournant à la vitesse synchrone avec laquelle le flux rotorique tourne et avec un axe d aligné avec le flux rotorique ;
   - un premier bloc de conversion (13) qui reçoit, en entrée, les composantes objectives de la tension statorique Vsd*, Vsq* et génère, en sortie, un vecteur Vs exprimant le module et la phase de la tension statorique exprimés dans un système de référence fixe ;
   - une commande PWM (17) qui reçoit, en entrée, le vecteur Vs et commande les interrupteurs d'un pont triphasé (14) qui coupe une tension continue Vdc qui alimente trois enroulements (2a, 2b, 2c) ou le stator du moteur à induction (2) au moyen de lignes électriques (16a, 16b et 16c) ;
   - un second bloc de conversion (18) qui reçoit en entrée la mesure des courants d'alimentation $i_{s1}$, $i_{s2}$, $i_{s3}$ du moteur (2), qui circulent le long des lignes électriques (16a, 16b et 16c) et génère en sortie les courants $i_{sd}$ et $i_{sq}$ mesurés le long des axes d et q du système de référence tournant ;
   - ledit estimateur (20) qui reçoit, en entrée, les courants $i_{sd}$ et $i_{sq}$ et les composantes objectives de la tension statorique Vsd*, Vsq* pour générer, en sortie, ladite vitesse synchrone $\omega^\wedge$ estimée du moteur ;
   - un bloc intégrateur (22) qui reçoit, en entrée, la vitesse synchrone estimée $\omega^\wedge$ et génère, en sortie, une estimation de la phase $\psi^\wedge$ du flux du rotor qui alimente le second bloc de conversion (18).

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003324998 A
- EP 2093878 A
- EP 2728736 A
- US 6532405 B

### Non-patent literature cited in the description

- **VAS P.** Sensorless vector and direct torque control. Oxford University Press, 1998, vol. 729
- **BOCKER, J. ; MATHAPATI, S.** State of the art of induction motor control. *IEEE International Electric Machines & Drives Conference, 2007. IEMDC '07,* 03 May 2007, vol. 2, 1459-1464
- **SCHAUDER, C.** Adaptive speed identification for vector control of induction motors without rotational transducers. *IEEE Trans. IA,* September 1992, vol. 28-5, 1054-1061
- **HOLTZ, J.** Sensorless control of induction machines - with or without signal injection?. *IEEE Trans. on IE,* February 2006, vol. 53-1, 7-30